# EUROPEAN PATENT APPLICATION

(11) **EP 4 745 316 A1**
(43) Date of publication of application: **20.05.2026**
(21) Application number: 25153218.0
(22) Date of filing: 22.01.2025
(51) Int. Cl.: E03C 1/084

(54) **FLOW RATE ADJUSTMENT STRUCTURE AND AERATOR COMPRISING SAME**

(30) Priority: 19.11.2024 CN 202422830013 U
(71) Applicant: Fujian Domoo Sanitary Ware Technology Co., Ltd, QuanZhou, Fujian 362304 (CN)
(72) Inventor: LIN, Xiaofa, QuanZhou, 362304 (CN); LIN, Xiaoshan, QuanZhou, 362304 (CN); ZENG, Zhaokuan, QuanZhou, 362304 (CN); CHEN, Zhiwei, QuanZhou, 362304 (CN); LIANG, Pansheng, QuanZhou, 362304 (CN); DENG, Xiaoqing, QuanZhou, 362304 (CN); LIU, Qiqiao, QuanZhou, 362304 (CN)
(74) Representative: Argyma

(57) **Abstract**

A flow rate adjustment structure includes an elastic member (1) and a water-passing member (2). The elastic member (1) includes a water-passing portion (10) located in a middle portion and a pressure-bearing portion (11) arranged outside the water-passing portion (10). The water-passing member (2) is configured to accommodate the elastic member (1) and is matched with the elastic member (1) to form a water-passing chamber (20). A water dispersion platform (22) is provided in a middle portion of the water-passing chamber (20) corresponding to the water-passing portion (10), and a water-passing hole (21) surrounding the water dispersion platform (22) is provided in the water-passing chamber (20). The pressure-bearing portion (11) is adapted to deform under the action of water pressure, so that a gap between an interface of the pressure-bearing portion (11) and the water-passing portion (10) and a top portion of the water dispersion platform (22) changes to adjust a flowing area of water.

## Description

### TECHNICAL FIELD

This disclosure relates to the technical field of water discharge devices, specifically to a flow rate adjustment structure and a bubbler.

### Description of Related Art

At present, in the water discharge device design, to meet the demand for water flow stability under different water pressure conditions, most of the solutions rely on an integrated flow rate adjustment structure. These structures typically utilize water pressure acting directly on the elastic member to regulate the flow rate through the deformation of the elastic member. Further, the elastic member is equipped with the filtration function, and a water-passing portion is arranged. However, in this design, although the system comprehensiveness is improved, there are limitations in the performance in low water pressure environments. When water pressure drops, the water flow passing through the water-passing portion significantly reduces, which not only weakens the impact force of the water flow on the elastic member body but also limits the deformation range of the elastic member. Due to the reduced deformation, the effectiveness of the elastic member in adjusting the flow rate is compromised, making it almost impossible to effectively achieve the intended flow limiting function.

### SUMMARY

The following is a brief description of the subject to be explained in detail in the specification, and the brief description is not intended to limit the protection scope of the claims.

The embodiments of the disclosure provide a flow rate adjustment structure including an elastic member and a water-passing member. The elastic member includes a water-passing portion located in a middle portion and a pressure-bearing portion arranged outside the water-passing portion. The water-passing portion protrudes from the pressure-bearing portion. The water-passing member is configured to accommodate the elastic member and matched with the elastic member to form a water-passing chamber. A water-passing hole is provided on a periphery of the water-passing chamber. A water dispersion platform is provided in a middle portion of the water-passing chamber corresponding to the water-passing portion. The pressure-bearing portion is adapted to deform under the action of water pressure, so that a gap between an interface of the pressure-bearing portion and the water-passing portion and an outer edge of a top portion of the water dispersion platform changes to adjust a flowing area of water.

The flow rate adjustment structure achieves adjustment of water flow volume through the coordinated action of the elastic member and the water-passing member. To be specific, the water-passing portion not only serves as a barrier for preliminary filtration of water flow but also being matched with the water dispersion platform inside the water-passing member to form the main channel path for water flow. The pressure-bearing portion has elastic characteristics. When water flow flows through, the water pressure that the water flow exerts directly acts on the pressure-bearing portion, so corresponding elastic deformation is triggered according to the intensity of water pressure, a gap size between the water-passing portion and the top portion of the water dispersion platform is affected, and the adjustment of the area through which the water flow flows is implemented. As the water pressure increases, the pressure-bearing portion gradually concaves towards the water-passing chamber, so the area of the water-passing channel is reduced, the speed and total volume of water flow is limited, and stability and controllability of water flow in a high-pressure environment is controlled. Under low water pressure conditions, due to the area limitation of the water-passing portion, water flow naturally accumulates and creates a pressure-building effect on the surface of the water-passing portion when passing through, and the compressive force of water flow on the pressure-bearing portion is thereby enhanced. Therefore, deformation occurs to adjust the water-passing channel, and stability and passing volume of water flow may also be reliably ensured in a low water pressure environment.

### BRIEF DESCRIPTION OF THE DRAWINGS

To make the technical solutions provided in the embodiments of the disclosure more clearly illustrated, several accompanying drawings required by the embodiments for description are briefly introduced as follows.
FIG. 1 is a schematic three-dimensional structural view of a bubbler according to Embodiment 3.
FIG. 2 is a schematic three-dimensional exploded view of the bubbler according to Embodiment 3.
FIG. 3 is a cross-sectional view of the bubbler according to Embodiment 3.
FIG. 4 is a schematic structural view of a water outlet member according to Embodiment 1.
FIG. 5 is a schematic structural view of an elastic member according to Embodiment 1.
FIG. 6 is a cross-sectional view of a flow rate adjustment structure according to Embodiment 1.
FIG. 7 is a cross-sectional view of deformation under water pressure of the elastic member in the flow rate adjustment structure according to Embodiment 1.
FIG. 8 is a schematic structural view of an elastic member according to Embodiment 2.
FIG. 9 is a cross-sectional view of a flow rate adjustment structure according to Embodiment 2.
FIG. 10 is a cross-sectional view of deformation under water pressure of the elastic member in the flow rate adjustment structure according to Embodiment 2.

### Description of main reference signs:

elastic member 1; water-passing member 2; bubbler body 3; water-passing portion; pressure-bearing portion 11; water through hole 12; single water through hole 13; water-passing chamber 20; water-passing hole 21; water dispersion platform 22; first protrusions 23; second protrusions 24; first gap 25; second gap 26; gas-liquid mixing chamber 30; ventilation groove 31; flow guide surface 32; water outlet hole 33; extension section 34

### DETAILED DESCRIPTION

The accompanying drawings in the embodiments of the disclosure are included to provide a clear and complete description of the technical solutions provided in the embodiments of the disclosure.

### Embodiment 1

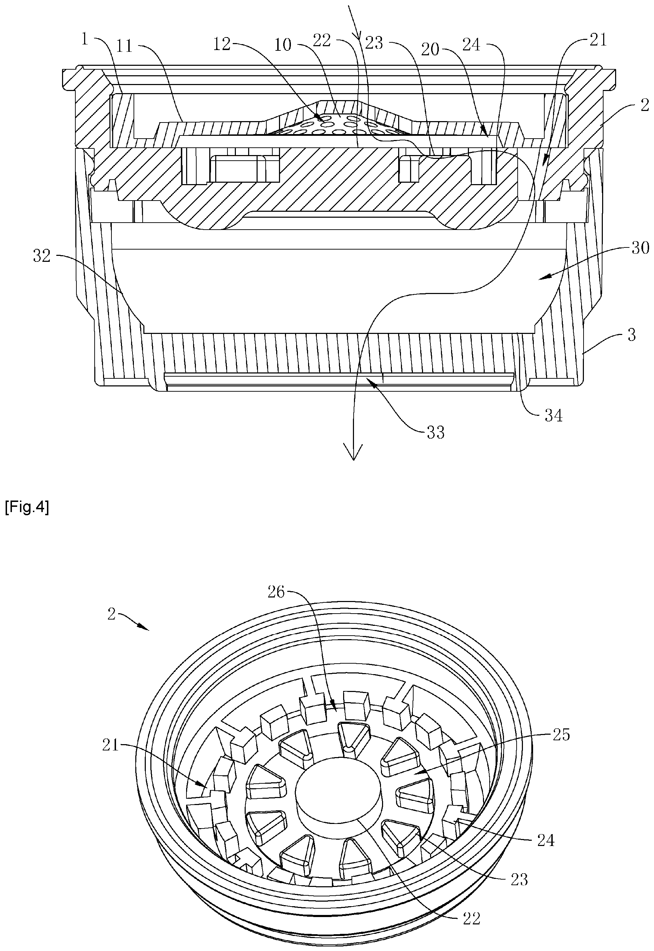

Referring to FIG. 4 to FIG. 7, a flow rate adjustment structure includes a water-passing member 2 and an elastic member 1.

The elastic member 1 includes a pressure-bearing portion 11 and a water-passing portion 10. The water-passing portion 10 is located centrally, with the pressure-bearing portion 11 enclosing and surrounding the water-passing portion 10 externally. The water-passing portion 10 protrudes from the pressure-bearing portion 11. In the flow rate adjustment structure, water pressure acting directly on the elastic member 1 is utilized, the flow rate is controlled through the deformation of the elastic member 1, and the elastic member 1 is equipped with a filtration function. To be specific, the elastic member 1 is a single thin sheet, with the central water-passing portion 10 being a water-dispersing and filtering structure. The pressure-bearing portion 11 is an elastic structure that deforms elastically under the impact of water flow. The elastic structure of this elastic member 1 is singular, allowing for controlled deformation of the pressure-bearing portion 11. The elastic sheet uses a single thin sheet to make it more sensitive, facilitating the adjustment of water pressure/volume at discharge.

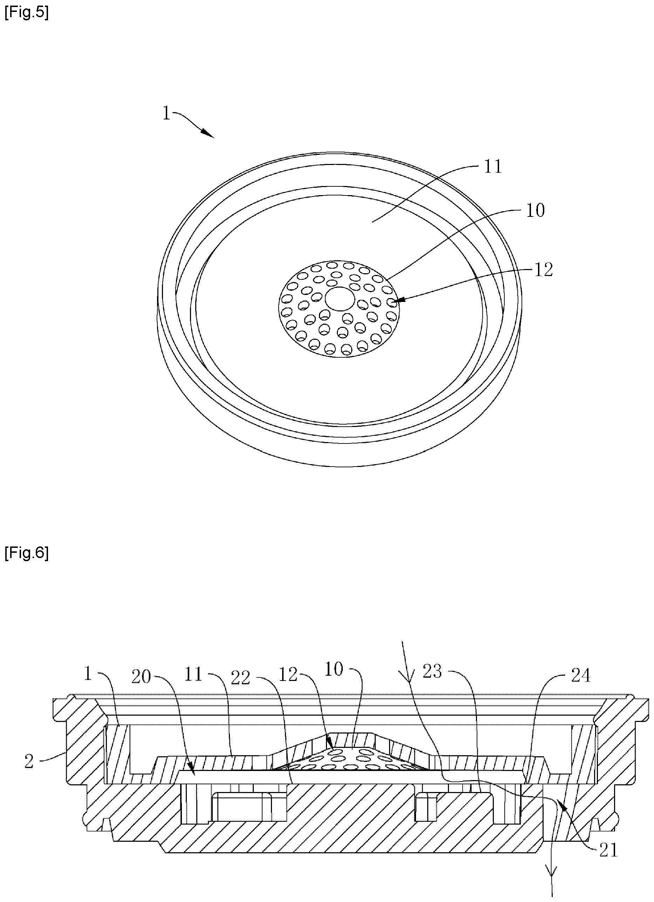

The water-passing portion 10 is provided with at least one water through hole 12. In this embodiment, the number of the at least one water through hole 12 is greater than one. The multiple water through holes 12 are evenly distributed on the water-passing portion 10. Arrangement of the water through holes 12 in the water-passing portion 10 can effectively filter out impurities and particles in the water flow, so the water quality after passing through the flow rate adjustment structure is improved. As shown in FIG. 5 and FIG. 6, the water-passing portion 10 is provided with multiple water through holes 12, and the number of water through holes 12 is greater than one. The multiple water through holes 12 are evenly distributed on the water-passing portion 10, and with the water-passing portion 10 protruding vertically from the pressure-bearing portion 11, the water-passing portion 10 forms an umbrella-like structure. When the water through holes 12 have a multi-hole structure, the water through holes 12 are evenly distributed on the water-passing portion 10, so uniform filtration of water flow in all directions is ensured, and the problem of excessive local filtration burden is prevented. Further, because the water-passing portion 10 protrudes from the pressure-bearing portion 11, gravity is utilized to naturally guide the impurities generated during the filtration process to the surroundings, so the accumulation and blockage of impurities in the water through holes 12 is effectively prevented.

The water-passing member 2, as shown in FIG. 4, is configured to accommodate the elastic member 1 and is matched with the elastic member 1 to form a water-passing chamber 20. To be specific, the elastic member 1 is placed above the water-passing member 2, snap-fitted with the water-passing member 2, and closely matched with the water-passing member 2 to form the water-passing chamber 20. A bottom wall of the water-passing member 2 is provided with a water dispersion platform 22, first protrusions 23, and second protrusions 24.

As shown in FIG. 4, water-passing holes 21 surrounding the water dispersion platform 22 are provided in the water-passing chamber 20. The number of the water-passing hole 21 is plural. The water through holes 12 communicate with the water-passing holes 21, and these water-passing holes 21 allow water to flow towards a bubbler. The water dispersion platform 22, as shown in FIG. 4, is located in a middle portion of the water-passing chamber 20, corresponds to the water-passing portion 10, and forms a water-passing channel in combination with the water-passing portion 10. The pressure-bearing portion 11 is adapted to deform under the action of water pressure, so that a gap between an interface of the pressure-bearing portion 11 and the water-passing portion 10 and a top portion of the water dispersion platform 22 changes to adjust a flowing area of water. An area of an outer edge of the water-passing portion 10 is greater than an area of an outer edge of the top portion of the water dispersion platform 22. To be specific, the water dispersion platform 22 may be, but not limited to, a cylindrical or polygonal protrusion, with the water-passing portion 10 located directly above the water dispersion platform 22. A water-passing area of the water-passing portion 10 is greater than the area of the outer edge of the top portion of the water dispersion platform 22, ensuring that even in a high water pressure environment, a certain gap is kept between the water-passing portion 10 and the outer edge of the top portion of the water dispersion platform 22, so the continuous passing ability of the water flow is ensured.

The first protrusions 23 are located in the middle portion of the water-passing chamber 20 and are evenly distributed around a circumference of the water dispersion platform 22, with a first gap 25 communicating with the water-passing holes 21 formed between two adjacent first protrusions 23. To be specific, the first protrusions 23 are arranged around a periphery of the water dispersion platform 22 and are evenly distributed. Each first protrusion 23 is a conical protrusion, with its conical surface gradually widening in a water flow direction, and its narrow conical top oriented towards the water dispersion platform 22. When water flows through the water-passing channel towards the water-passing holes 21, it first encounters the first protrusions 23 evenly distributed around the circumference of the water dispersion platform 22. Due to the presence of the first protrusions 23, the water flow relatively concentrated is effectively dispersed. This dispersed water flow then passes through the first gaps 25 formed between adjacent first protrusions 23 and flows towards the various water-passing holes 21 in a more uniform and dispersed manner. Each first protrusion 23 is a conical protrusion, with its conical surface gradually expanding in the water flow direction, allowing the water flow to experience a more uniform and gradually increasing dispersing force when impacting the conical surface. As the water flow flows towards the wider end of the conical surface, the water flow is progressively dispersed into finer and more uniform water streams.

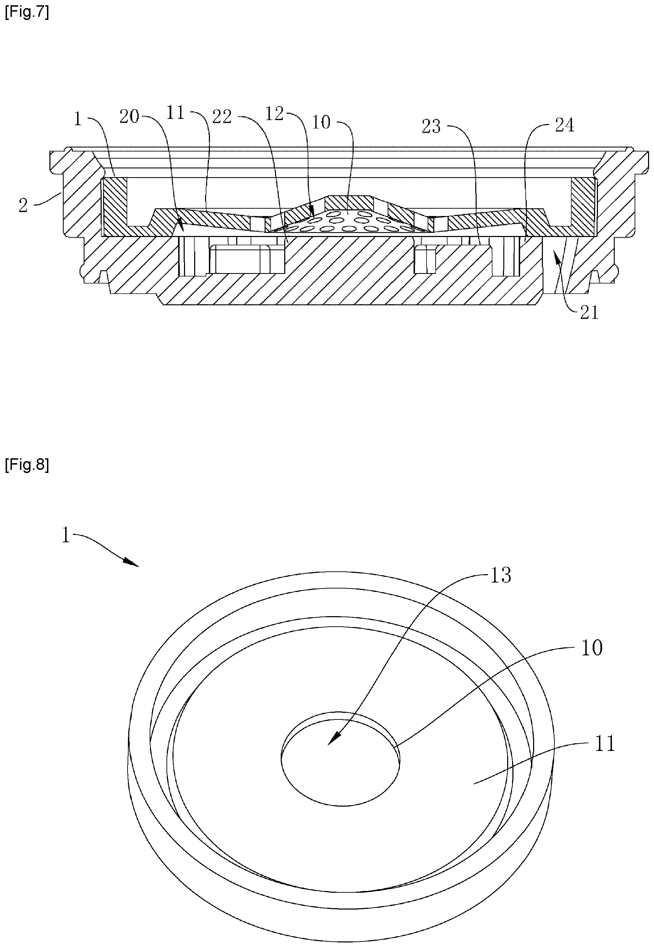

As shown in FIG. 6 and FIG. 7, the pressure-bearing portion 11 is elastically deformed in a direction towards the water-passing chamber 20 until it abuts against the first protrusions 23 under the action of water pressure. In this embodiment, the first protrusions 23 are introduced as a limiting device for the elastic deformation of the pressure-bearing portion 11. In a high water pressure environment, the impact force of water flow on the pressure-bearing portion 11 increases, which may lead to excessive elastic deformation of the pressure-bearing portion 11, so the stability and reliability of flow rate adjustment may be affected. However, through the limiting action of the first protrusions 23, the deformation of the pressure-bearing portion 11 is effectively controlled within a reasonable range. Once the pressure-bearing portion 11 contacts the first protrusions 23, its further deformation is hindered, and potential structural damage or functional failure that may be caused by excessive deformation is prevented.

Each second protrusion 24, as shown in FIG. 4, is arranged at the periphery of the water-passing chamber 20 near the water-passing holes 21. The second protrusions 24 are evenly arranged around the circumference of the water-passing holes 21, are located on the outer side of the first protrusions 23, and are oriented towards the first gaps 25 or the first protrusions 23. Further, a second gap 26 communicating with the water-passing holes 21 is formed between two adjacent second protrusions 24. To be specific, the second protrusions 24 are located in an outer ring of the first protrusions 23 and are close to the water-passing holes 21. A shape of each second protrusion 24 is a square protrusion. Between the second protrusions 24 and ribs distributed along the circumference are water-passing slits. The water-passing slits are interrupted by connecting a rib with every other second protrusion 24, thus forming the water-passing holes 21. The second protrusions 24 perform a secondary dispersion of the water flow that has been initially dispersed through the first gaps 25. After passing through the first gaps 25, the water flow encounters the second protrusions 24 evenly arranged along the circumference. These protrusions further divide the water flow into finer streams. As the water flow flows, these streams dispersed by the second protrusions 24 subsequently flow out through the second gaps 26 formed between adjacent second protrusions 24, ultimately converging into the various water-passing holes 21.

In this embodiment, the flow rate adjustment structure achieves adjustment of water flow volume through the coordinated action of the elastic member 1 and the water-passing member 2. To be specific, the water-passing portion 10 not only serves as a barrier for preliminary filtration of water flow but also being matched with the water dispersion platform 22 inside the water-passing member 2 to form the main channel path for water flow. The pressure-bearing portion 11 has elastic characteristics. When water flow flows through, the water pressure that the water flow exerts directly acts on the pressure-bearing portion 11, so corresponding elastic deformation is triggered according to the intensity of water pressure, a gap size between the water-passing portion 10 and the outer edge of the top portion of the water dispersion platform 22 is affected, and the adjustment of the area through which the water flow flows is implemented. As the water pressure increases, the pressure-bearing portion 11 gradually concaves towards the water-passing chamber 20, so the area of the water-passing channel is reduced, the speed and total volume of water flow is limited, and stability and controllability of water flow in a high-pressure environment is controlled. Under low water pressure conditions, due to the area limitation of the water-passing portion 10, water flow naturally accumulates and creates a pressure-building effect on its surface when passing through, and the compressive force of water flow on the pressure-bearing portion 11 is thereby enhanced. Therefore, deformation occurs to adjust the water-passing channel, and stability and passing volume of water flow may also be reliably ensured in a low water pressure environment.

### Embodiment 2

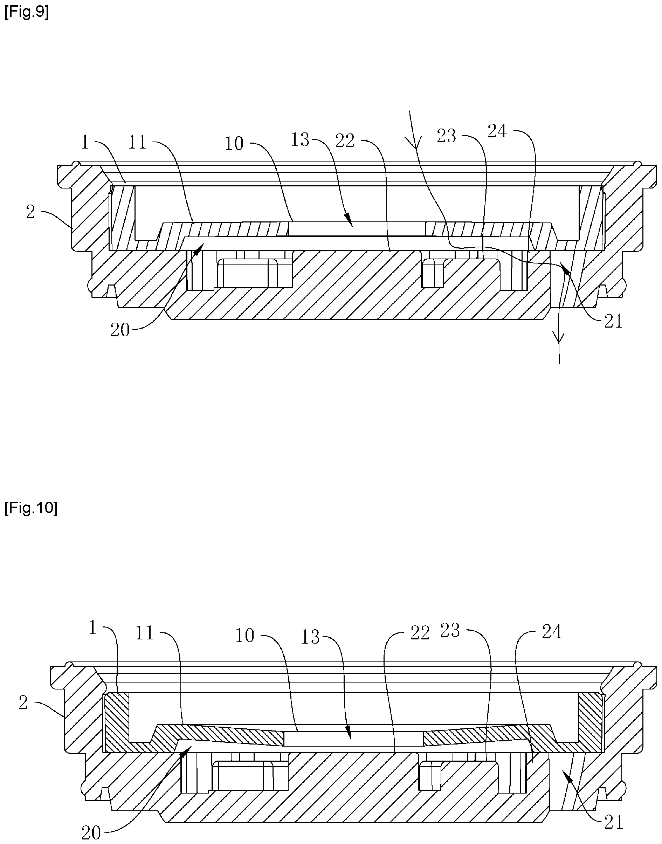

As shown in FIG. 7 and FIG. 9, the difference from Embodiment 1 is that in this embodiment, the water-passing portion 10 is arranged as a single water through hole 13. The single water through hole 13 has a larger diameter than the multiple water through holes 12, and different arrangements of water through holes 12 are configured to adapt to the processing needs at different water quality and flow rate. In this case, the water-passing portion 10 and the pressure-bearing portion 11 are horizontally arranged. The water pressure/flow rate adjustment between the water-passing portion 10 and the water dispersion platform 22, and the limiting effect between the pressure-bearing portion 11 and the first protrusions 23 are consistent with that of Embodiment 1, so description thereof is not repeated herein.

### Embodiment 3

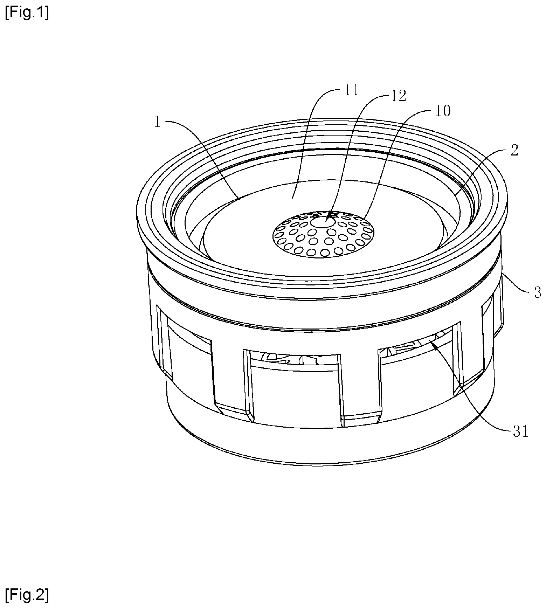

As shown in FIG. 1 to FIG. 3, a bubbler includes a bubbler body 3 and the flow rate adjustment structure of Embodiment 1 or Embodiment 2. The bubbler body 3 accommodates the flow rate adjustment structure and is matched with the flow rate adjustment structure to form a gas-liquid mixing chamber 30 communicating with the water-passing holes 21. To be specific, the flow rate adjustment structure is assembled in the bubbler body 3 and snap-fitted with the bubbler body 3.

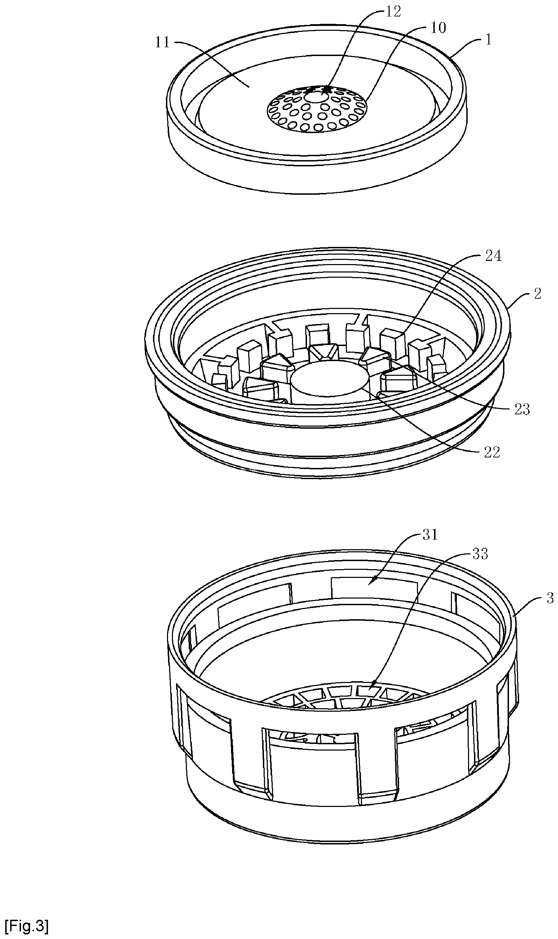

As shown in FIG. 1 and FIG. 2, a side wall of the bubbler body 3 is provided with a plurality of ventilation grooves 31 communicating with the gas-liquid mixing chamber 30 and used for introducing air to form bubble water. A lower chamber wall of the bubbler body 3 is provided with a plurality of water outlet holes 33 communicating with the gas-liquid mixing chamber 30 and used for discharging the mixed bubble water. The bubbler using this flow rate adjustment structure achieves the dual functions of gas-liquid mixing and flow rate adjustment and may adapt to different water pressure environments. The bubbler body 3 is matched with the flow rate adjustment structure to form the gas-liquid mixing chamber 30. When water flow flows from the narrow water-passing holes 21 around the flow rate adjustment structure towards the relatively spacious gas-liquid mixing chamber 30, the water flow velocity increases, forming a negative pressure effect in the mixing chamber. This negative pressure state creates a pressure difference with the outside, attracting external air to rapidly enter the mixing chamber 30 through the ventilation grooves 31 and thoroughly mixing with the water flow dispersed by the flow rate adjustment structure to form bubble water.

To optimize the formation and distribution of bubbles, as shown in FIG. 3, the periphery of the bubbler body 3 is arranged as an arc-shaped flow guide surface 32 in the circumferential direction. The gas-liquid mixed water impacts the flow guide surface 32 and flows along the flow guide surface 32 towards the middle of the lower chamber wall, with at least part of the gas-liquid mixed water rebounding upwards in a direction away from the flow guide surface 32. In conventional designs, the peripheral edge of the bubbler body 3 is a vertical surface, which may cause water flow flowing out of the flow rate adjustment structure to directly impact the bottom edge of the bubbler body 3, so the potential risk of water leakage increases. Further, at low pressure, the air mixing effect is poor, with most of the low-pressure water flowing out along the edge of the bubbler body 3, resulting in no water spray in the middle circle and creating a hollow phenomenon in the water spray most of the time, and user experience is thereby affected. In this embodiment, the periphery of the bubbler body 3 is arranged as an arc-shaped flow guide surface 32 in the circumferential direction. As the water-passing holes 21 are located at the periphery of the water-passing chamber 20, the water coming out of the water-passing holes 21 mixes with the air entering through the ventilation grooves 31 on the side wall of the bubbler body 3 to form gas-liquid mixed water that impacts the arc-shaped flow guide surface 32. The circular arc of the flow guide surface 32 effectively disperses the impact force of the water flow, allowing the water to flow more smoothly along the flow guide surface 32, and the risk of water leakage is thereby decreased. The circular arc design causes the gas-liquid mixed water to gather towards the center on the flow guide surface 32. During this process, the contact area between the water flow and air increases, so mixing is thorough, air mixing effect is improved, and the hollow phenomenon is prevented due to the evenly distributed water spray. Further, at least part of the gas-liquid mixed water may rebound upwards in a direction away from the flow guide surface 32, promoting the turnover and re-streamlining of the water flow in the inner chamber of the bubbler body 3. The water discharge is thus uniform, and the fineness and stability of the bubbles is further enhanced.

An extension section 34 from the flow guide surface 32 to the water outlet holes 33 is arranged horizontally. The lower chamber wall of the bubbler body 3 extending from the arc surface of the flow guide surface 32 towards the water outlet hole 33 is the horizontal extension section 34, and a stable water outlet channel is thereby formed. During the gas-liquid mixing process, even if the internal water flow experiences some disturbance due to the mixing dynamics, this horizontal extension section 34 may effectively prevent the gas-liquid mixed water from flowing backwards along the flow guide surface 32, especially preventing it from flowing back to the exterior through the ventilation grooves 31, so the risk of water leakage is reduced.

Although the description of the specification and embodiments provided above serve to explain the scope of the disclosure, such description should not be construed as limitations on the scope of the disclosure. Through inspiration provided by the disclosure or the embodiments, modifications, equivalents, or other improvements of the embodiments or part of the technical features of the disclosure obtained by a person having ordinary skill in the art by combining general knowledge and common technical knowledge in the art and/or related art through logical analyses, reasoning, or limited tests fall within the protection scope of the disclosure.

## Claims

1. A flow rate adjustment structure, **characterized by** comprising:
an elastic member (1) comprising a water-passing portion (10) located in a middle portion and a pressure-bearing portion (11) arranged outside the water-passing portion (10); and
a water-passing member (2) configured to accommodate the elastic member (1) and matched with the elastic member (1) to form a water-passing chamber (20), wherein a water dispersion platform (22) is provided in a middle portion of the water-passing chamber (20) corresponding to the water-passing portion (10), and a water-passing hole (21) surrounding the water dispersion platform is provided in the water-passing chamber (20) ,
the pressure-bearing portion (11) is adapted to deform under the action of water pressure, so that a gap between an interface of the pressure-bearing portion (11) and the water-passing portion (10) and a top portion of the water dispersion platform (22) changes to adjust a flowing area of water.

2. The flow rate adjustment structure according to claim 1, **characterized in that** a water-flowing area of the water-passing portion (10) is greater than an area of an outer edge of the top portion of the water dispersion platform (22).

3. The flow rate adjustment structure according to claim 2, **characterized in that** a plurality of first protrusions (23) are further provided in the middle portion of the water-passing chamber (20), the first protrusions (23) are evenly arranged around the water dispersion platform (22), and a first gap (25) communicating with the water-passing hole (21) is formed between two adjacent first protrusions (23).

4. The flow rate adjustment structure according to claim 3, **characterized in that** each first protrusion (23) is a conical protrusion, and a conical surface thereof gradually widens in a water flow direction.

5. The flow rate adjustment structure according to claim 3, **characterized in that** the pressure-bearing portion (11) is elastically deformed in a direction toward the water-passing chamber (20) to abut against the first protrusions (23) under the action of water pressure.

6. The flow rate adjustment structure according to claim 3, **characterized in that** a plurality of second protrusions (24) are provided on a periphery of the water-passing chamber (20) near the water-passing hole (21), the second protrusions (24) are evenly distributed around outer circumferences of the first protrusions (23) and face the first gaps (25) or the first protrusions (23), and a second gap (26) communicating with the water-passing hole (21) is formed between two adjacent second protrusions (24).

7. The flow rate adjustment structure according to claim 1, **characterized in that** the water-passing portion (10) is provided with at least one water through hole (12), and the at least one water through hole communicates with the water-passing hole (21), wherein when the number of the at least one water through hole (12) is greater than one, the water-passing portion (10) protrudes from the pressure-bearing portion (11), and the at least one water through hole (12) is evenly distributed in the water-passing portion (10).

8. A bubbler **characterized by** comprising a bubbler body (3) and the flow rate adjustment structure according to any one of claims 1 to 7, wherein the bubbler body (3) is configured to accommodate the flow rate adjustment structure and matched with the flow rate adjustment structure to form a gas-liquid mixing chamber (30) communicating with the water-passing hole (21), a side wall of the bubbler body (3) is provided with a plurality of ventilation grooves (31) communicating with the gas-liquid mixing chamber (30), and a lower chamber wall thereof is provided with a plurality of water outlet holes (33) communicating with the gas-liquid mixing chamber (30).

9. The bubbler according to claim 8, **characterized in that** a periphery of the bubbler body (3) is arranged as an arc-shaped flow guide surface (32) in a circumferential direction, gas-liquid mixed water impacts the flow guide surface (32) and flows along the flow guide surface (32) toward the middle of the lower chamber wall, and at least a portion of the gas-liquid mixed water rebounds upward in a direction away from the flow guide surface (32).

10. The bubbler according to claim 9, **characterized in that** an extension section (34) from the flow guide surface (32) to the water outlet holes (33) is arranged horizontally.
